Europäisches Patentamt

European Patent Office

Office européen des brevets

(11) Publication number: **0 350 549 B1**

# EUROPEAN PATENT SPECIFICATION

(45) Date of publication of patent specification: **08.09.93**  (51) Int. Cl.⁵: **B01J 29/28**, C10G 11/05,
//B01J29/06

(21) Application number: **88306364.6**

(22) Date of filing: **12.07.88**

(54) **Process for preparing a crystalline porous silicate composite and its use in catalytic cracking.**

(43) Date of publication of application:
**17.01.90 Bulletin 90/03**

(45) Publication of the grant of the patent:
**08.09.93 Bulletin 93/36**

(84) Designated Contracting States:
**BE DE FR GB IT NL SE**

(56) References cited:
**WO-A-80/02026**
**FR-A- 1 557 305**
**FR-A- 2 083 584**
**US-A- 3 886 094**

(73) Proprietor: **MOBIL OIL CORPORATION**
**150 East 42nd Street**
**New York New York 10017(US)**

(72) Inventor: **Herbst, Joseph Anthony**
**60 Bryant Road**
**Turnersville New Jersey 08012(US)**
Inventor: **Huss, Albin, Jr.**
**51 Stirling Way**
**Chadds Ford Pennsylvania 19317(US)**

(74) Representative: **Colmer, Stephen Gary**
**Patent Department c/o Mobil Services Company Limited Mobil Court 3 Clements Inn**
**London WC2A 2EB (GB)**

EP 0 350 549 B1

## Description

This invention relates to a method for preparing shape-selective porous crystalline silicates bound with an inorganic oxide matrix wherein the matrix precursor is added to the crystalline silicate reaction mixture after crystallization of said silicate. This invention further relates to the use of such catalyst compositions in catalytic cracking of hydrocarbons, especially as octane enhancement additives to the cracking catalyst inventory. For the purposes of the present invention, shape-selective porous crystalline silicates are those porous crystalline silicates having a Constraint Index of 1 to 12 as further described below.

Hydrocarbon conversion processes utilizing porous crystalline silicates such as zeolites have been the subject of extensive investigation during recent years, as is obvious from both the patent and scientific literature. Zeolites (a term which for present purposes is used interchangeably with "porous crystalline silicates") have been found to be particularly effective for a wide variety of hydrocarbon conversion processes, including the catalytic cracking of a gas oil to produce motor fuels and have been described and claimed in many patents, including U.S. Patents 3,140,249; 3,140,251; 3,140,252; 3,140,253 and 3,271,418. It is also known in the prior art to incorporate the crystalline zeolite into a matrix for catalytic cracking and such disclosure appears in one or more of the above-identified U.S. patents.

It is also known that improved results will be obtained with regard to the catalytic cracking of gas oils if a crystalline zeolite having a pore size of less than 7 Angstrom units, e.g. ZSM-5, is admixed with a crystalline zeolite having a pore size greater than 8 Angstrom units, either with or without a matrix. A disclosure of this type is found in U.S. Patent 3,769,202. Although the incorporation of a crystalline zeolite having a pore size of less than 7 Angstrom units into a catalyst comprising a larger pore size crystalline zeolite (pore size greater than 7 Angstrom units) has indeed been very effective with respect to the raising of octane number, nevertheless it did so at the expense of the yield of gasoline.

Improved octane number with some loss in gasoline yield was shown in U.S. Patent 3,758,403. In said patent, the cracking catalyst was comprised of a large pore size crystalline zeolite (pore size greater than 7 Angstrom units) in admixture with ZSM-5 zeolite, wherein the ratio of ZSM-5 zeolite to large pore size crystalline zeolite was in the range of 1:10 to 3:1.

The use of ZSM-5 zeolite in conjunction with a zeolite cracking catalyst of the X or Y faujasite variety is described in U.S. Patents 3,894,931; 3,894,933; 3,894,934 and 4,521,298. The first two patents disclose the use of ZSM-5 zeolite in amounts up to and about 5 to 10 wt.%; the third patent discloses the weight ratio of ZSM-5 zeolite to large pore size crystalline zeolite in the range of 1:10 to 3:1. The fourth utilizes a catalyst inventory wherein the zeolite is unbound.

ZSM-5 catalyst, especially virgin catalyst, has exceedingly high activity. Researchers have attempted to take advantage of the activity of fresh ZSM-5 catalyst by adding only small amounts of it to the cracking catalyst inventory. Typical of such work is U.S. Patent 4,309,280. This patent teaches that the addition of very small amounts of powdered ZSM-5 catalyst, characterized by a particle size less than 5 microns can substantially enhance product octane number, while increasing $C_{5+}$ gasoline plus potential alkylate yield.

The use of shape-selective zeolite-containing catalysts to increase refinery gasoline octane is receiving considerable attention of late, particularly in fluidized catalytic cracking (FCC) and moving bed catalytic cracking processes, e.g., Thermofor Catalytic Cracking (TCC). Accordingly, there is a substantial incentive to reduce the cost of manufacturing both the shape-selective zeolite crystals and the finished catalyst to be used in cracking. In addition, any improvements in a shape-selective zeolite catalyst's hydrothermal stability would reduce catalyst requirements and thereby improve the cost effectiveness of such zeolites in cracking.

Zeolite additive catalysts used in catalytic cracking are ordinarily prepared by methods which require separating out ZSM-5 from its reaction mixture and admixing it with an inorganic oxide in a hydrous state or in a dried state. The need to separate out the zeolite from its reaction mixture, followed by washing and drying, adds significant costs to the bound catalyst. For example, although U.S. Patent 4,612,298 teaches preparation of a clay bound zeolite Y cracking catalyst in the presence of silica, this silica appears to be added rather than derived from the zeolite reaction mixture. Moreover, unincorporated silica and alumina remaining in the reaction mixture are unavailable for use in the bound catalyst. Accordingly, it would be desirable to find a way of reducing the cost of preparing shape-selective bound porous crystalline silicate-containing catalysts used in catalytic cracking while avoiding alteration of the desirable properties of such catalysts.

In US-A-3886094 there is disclosed zeolite containing catalyst compositions which are prepared by partially crystallising a zeolite reaction mixture which contains amorphous silica-alumina nucleation centres capable of initiating the rapid crystallisation of zeolite to form a zeolite suspended in an excess of aqueous alkali metal silicate solution.

In FR-A-2083594 there is disclosed a method of cracking hydrocarbons with a faujasite zeolite catalyst. Methods for preparation of the catalyst are disclosed.

It has now been found that porous crystalline silicates can be bound with a source of inorganic oxide matrix containing silica, at least some of which is obtained from unincorporated silica taken from a porous crystalline silicate reaction mixture mother liquor. Such silica has not been incorporated into the porous crystalline silicate framework and can include oxides such as those selected from the group consisting of alumina, gallia, boria, germania, magnesia, titania and beryllia, with alumina particularly preferred. The reaction mixture mother liquor may be one which is used to prepare a porous crystalline silicate other than the shape-selective porous crystalline silicate being composited or bound with inorganic oxide matrix.

According to present invention a method of preparing a catalyst comprising a composite of a crystalline zeolite and an inorganic oxide matrix, for use in catalytic cracking, in which the composite is formed from the components of a siliceous solution containing the already-synthesised crystalline zeolite, and is subjected to drying, is characterised in that said crystalline zeolite has a $SiO_2/Al_2O_3$ mole ratio greater than 12 and a constraint index between 1 and 12, and said siliceous solution results from bringing together a silica-containing reaction mixture in which said zeolite has crystallised and a silica-containing inorganic oxide matrix precursor solution which is independently capable of forming a matrix for said zeolite, the matrix of the resulting composite containing silica derived not only from the precursor solution but also from the reaction mixture. Such a method is a advantageous in that it utilizes unused silica and optionally alumina present in the reaction mixture, which has not been incorporated in the porous crystalline silicate framework, by incorporating the silica and optionally alumina in the inorganic oxide matrix. Moreover, the resulting bound catalyst can exhibit enhanced hydrothermal stability and octane improvement capabilities compared with conventionally prepared materials.

The porous crystalline silicate can have a structure selected from the group consisting of zeolite beta, ZSM-5, ZSM-11 and ZSM-50, preferably the structure of ZSM-5. The reaction mixture may also comprise a source of aluminum, a source of alkali metal and an organic directing agent. Preferably the reaction mixture comprises amorphous precipitated silica as a source of silicon.

In one preferred embodiment, the porous crystalline silicate of the invention has the structure of ZSM-5, while the reaction mixture contains a source of aluminum which includes aluminum sulfate. Any suitable source of alkali metal can be used, with sodium hydroxide particularly preferred. Any suitable organic directing agent may be used; an n-alkylamine is particularly preferred. The initial solids content of said reaction mixture employed in the present invention is greater than about 10 wt.%, preferably at least 15 or even 20 wt.%. The drying step can be accomplished by any suitable means. Spray drying is particularly useful to form an inorganic oxide matrix-bound porous crystalline silicate having a particle diameter of about 20 to 120 microns, a size suited for fluidized catalytic cracking. Generally, the organic directing agent employed in the zeolite formation can be essentially removed by any suitable technique prior to adding said matrix precursor, e.g. flashing. The resulting composite product comprises about 40 to 95, preferably about 75 to 95 wt.%. of inorganic oxide matrix.

The present invention also relates to a method for catalytic cracking of a hydrocarbon feedstock in a cracking unit to a product comprising gasoline. Such cracking takes place in the presence of a cracking catalyst inventory comprising the bound product of the invention and a catalytically active large pore size crystalline silicate cracking catalyst having a pore size greater than about 7 angstroms. Such catalysts include amorphous silica-alumina, crystalline silica-alumina and crystalline zeolites selected from the group consisting of zeolite X, zeolite Y, and naturally occurring faujasite. Zeolite Y, particularly rare earth-exchanged zeolite Y, is a suitable catalytically active large pore size porous crystalline silicate cracking catalyst.

In another embodiment of the invention, the catalyst composite can be treated with steam.

The catalyst composite of the invention is suited to catalytic cracking processes in general, especially in fluid bed cracking units (FCC) and moving bed catalytic cracking units.

The present invention further provides a process for catalytically cracking a hydrocarbon feedstock in a cracking unit to a product comprising gasoline in the presence of a cracking catalyst under cracking conditions. The cracking catalyst comprises a catalytically active cracking component admixed with a porous crystalline silicate having a Constraint Index between 1 and 12 and a silica-to-alumina ratio greater than 12. The improvement resides in the porous crystalline silicate being bound with silica-containing inorganic oxide matrix prior to removal of the porous crystalline silicate from its reaction mixture.

Addition of a catalyst composition of the present invention, comprising one or more members of a class of shape-selective zeolites, as defined hereinafter, is extremely effective as an octane and total yield improver in relatively small amounts when used in conjunction with a conventional cracking catalyst. It has been found that only about 0.01 to 10.0 wt.% of this class of zeolites needs to be added to the conventional cracking catalyst in the unit under conventional cracking operations to increase octane. Octane increase and total yield can be varied with the content of the shape-selective zeolite. If excess alkylation capacity is available, $C_5^+$ gasoline plus alkylate yields are higher when a steam treated shape-selective porous crystalline silicate of the present invention is utilized, as compared to conventional commercial cracking catalysts, containing conventionally prepared, steamed, shape-selective porous crystalline silicates.

Steaming of the shape-selective porous crystalline silicate can occur primarily in two ways. In one method, the porous crystalline silicate may be steamed under certain conditions specified herein prior to adding the porous crystalline silicate to the catalytic reactor. The other method is to add the porous crystalline silicate to be steamed to the catalytic reactor unit and expose it to steaming conditions within the reactor specified herein for a period of time sufficient to adequately steam the catalyst.

It is clear from the foregoing that octane gain can be controlled to the extent desired by the introduction of only very small amounts of the shape-selective porous crystalline silicate of the present invention. In commercial practice, the octane gain could be maximized or controlled, for example, to operate at full alkylation capacity which is dependent on $C_3$-$C_4$ olefins and isobutane availability.

The particular proportion of the shape-selective zeolite introduced to the conventional cracking catalyst inventory is an important feature, in that such a very small amount of such zeolite is required to produce substantial octane gains without substantial gasoline plus distillate yield loss. The weight percent of the shape-selective zeolite required in relation to the total quantity of conventional cracking catalyst in the unit can range between about 0.01 and about 10.0, and preferably from between about 0.05 and about 5.0, and most preferably between 1.0 and 2.0. The exact weight percent will vary from cracking unit to cracking unit, depending on the desired octane number, total gasoline yield required, the available feedstock, and the content of active component in the conventional cracking catalyst.

The shape-selective porous crystalline silicate can be injected into the reactor at any time during the catalytic cracking process. It can be added in the same catalyst particle as the cracking component, in a separate catalyst particle, or as a particle consisting in part or totally of shape-selective porous crystalline silicate crystals. The shape-selective porous crystalline silicate can be introduced while the cracking unit is down, or while the cracking unit is on on-stream operation. Once such porous crystalline silicate is added to the cracking process, the refiner can return to conventional operation or an operation at lower octane number by eliminating or decreasing the use of the shape-selective porous crystalline silicate.

Catalytic cracking units which are amenable to the process of this invention operate within the temperature range of about 205°C (400°F) to 871°C (1600°F), and under reduced, atmospheric or superatmospheric pressure. The catalytic cracking process can be either fixed bed, moving bed or fluidized bed, and the hydrocarbon chargestock flow may be either concurrent or countercurrent to the conventional catalyst flow. The process of this invention is particularly applicable to the fluid catalytic cracking (FCC) process.

The FCC process is well known to the art and a detailed description thereof is not believed necessary. Although the design and construction of individual plants vary, the essential elements of an FCC unit are illustrated in U.S. Patent 4,368,114.

Briefly, in the FCC process the catalyst is in the form of microspheres, which acts as a fluid when suspended in oil vapor or gas. Hydrocarbons contact the fluidized catalyst and are catalytically cracked to lighter products. The catalyst is deactivated by coke deposition, necessitating regeneration of coked catalyst in a regenerator.

As mentioned previously, a feature of the present invention resides in its flexibility in the way the shape-selective porous crystalline silicate may be added in the same catalyst particle as the cracking component or as a separate catalyst particle. Further, the shape-selective porous crystalline silicate may be added to the regenerator or, if present as small size particles, directly to the hydrocarbon feed.

After cracking, the resulting product gas can be compressed and the resulting products may suitably be separated from the remaining components by conventional means, such as adsorption, distillation, etc.

Catalysts containing both the large pore and shape-selective zeolites can be prepared by the present invention by addition of the large pore zeolite to the binder/shape-selective zeolite mixture, preferably before drying. Representative crystalline zeolite reactive component constitutents of said cracking catalysts include zeolite X (U.S Patent 2,882,244), zeolite Y (U.S. Patent 3,130,007), synthetic mordenite and dealuminized synthetic mordenite, merely to name a few, as well as naturally occurring zeolites, including chabazite, faujasite, mordenite, and the like. Preferred crystalline zeolites include natural faujasite and the synthetic faujasite zeolites X and Y, with particular preference being accorded zeolite Y. For the purposes of the present invention, zeolite Y includes zeolite Y in its as-synthesized form as well as its variant forms including framework dealuminated zeolite Y, e.g., ultrastable Y (USY) (described in U.S. Patent No. 3,293,192) and LZ-210 (described in U.S. Patent No. 4,503,023).

In general, the large pore crystalline zeolites are ordinarily ion exchanged either separately or in the final catalyst with a desired cation to replace alkali metal present in the zeolite as found naturally or as synthetically prepared. The exchange treatment is such as to reduce the alkali metal content of the final catalyst to less than about 1.5 wt.% and preferably less than about 0.5 wt. %. The purpose of ion exchange is to substantially remove alkali metal cations which are known to be deleterious to cracking, as well as to introduce particularly desired catalytic activity by means of the various cations used in the exchange medium. For the cracking operation described herein, preferred cations are hydrogen, ammonium, rare earth and mixtures thereof, with particular preference being accorded rare earth. Such rare earth elements include Sm, Nd, Pr, Ce and La. Ion exchange is suitably accomplished by conventional contact of the zeolite with a suitable salt solution of the desired cation such as, for example, the sulfate, chloride or nitrate.

The shape-selective porous crystalline silicate of the cracking catalyst is incorporated in a suitable inorganic oxide matrix because this catalyst form is generally characterized by a high resistance to attrition, high activity and exceptional steam stability. The inorganic oxide which serves as the matrix in which the above porous crystalline silicate is distributed includes silica gel or a cogel of silica and a suitable metal oxide. Representative cogels include silica-alumina, silica-magnesia, silica-zirconia, silica-thoria, silica-beryllia, silica-titania, as well as ternary combinations such as silica-alumina-magnesia, silica-alumina-zirconia and silica-magnesia-zirconia. Preferred cogels include silica-alumina, silica-zirconia or silica-alumina-zirconia. The above gels and cogels will generally comprise a major proportion of silica and a minor proportion of the other aforementioned oxide or oxides. Thus, the silica content of the siliceous gel or cogel matrix will generally fall within the range of 55 to 100 wt.%, preferably 60 to 95 wt.%, and the other metal oxide or oxides content will generally be within the range of 0 to 45 wt.% and preferably 5 to 40 wt.%. In addition to the above, the matrix may also comprise natural or synthetic clays, such as kaolin type clays, montmorillonite, bentonite or halloysite. These clays may be used either alone or in combination with silica or any of the above specified cogels in matrix formulation.

The content of shape-selective porous crystalline silicate in the bound catalyst is generally between about 5 and about 60 wt.%. Ion exchange of the shape-selective porous crystalline silicate to replace its initial alkali metal content can be accomplished either prior to or subsequent to incorporation of the porous crystalline silicate into the matrix.

The above compositions may be readily processed so as to provide fluid cracking catalysts by spray drying the composite to form microspheroidal particles of suitable size. Alternatively, the composition may be adjusted to suitable concentration and temperature to form bead-type catalyst particles suitable for use in moving bed type cracking sysems. The catalyst may also be used in various other forms such as those obtained by tabletting, balling or extruding.

Hydrocarbon chargestocks undergoing cracking in accordance with this invention comprise hydrocarbons generally and, in particular, petroleum fractions having an initial boiling range of at least 205°C (400°F), a 50% point of at least 260°C (500°F), and an end point of at least 315°C (600°F). Such hydrocarbon fractions include gas oils, residual oils, cycle stocks, whole top crudes and heavy hydrocarbon fractions derived by the destructive hydrogenation of coal, tar, pitches, asphalts and the like. As will be recognized, the distillation of higher boiling petroleum fractions above about 400°C (750°F) must be carried out under vacuum in order to avoid thermal cracking. The boiling temperatures utilized herein are expressed, for convenience, in terms of the boiling point corrected to atmospheric pressure.

For purposes of this invention, the term "zeolite" is meant to represent the class of porotectosilicates, i.e. porous crystalline silicates that contain silicon and oxygen atoms as the major components. Other components may be present in minor amounts, usually less than 14 mole %, and preferably less than 4 mole %. These components include aluminum, gallium, iron, boron and the like, with aluminum being preferred, and used herein for illustration purposes. The minor components may be present separately or in mixtures.

The silica-to-alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with a silica-to-alumina mole ratio of at least 12 are useful, it is preferred, in some instances, to use zeolites having much higher silica-to-alumina mole ratios, i.e. ratios of at least 500:1. In addition, zeolites, as otherwise characterized herein but which are substantially free of aluminum, i.e. having silica-to-alumina mole ratios up to infinity, are found to be useful and even preferable in some instances. Such "high silica" zeolites are intended to be included within this description. The novel class of zeolites, after activation, acquire an intra-crystalline sorption affinity for normal hexane, which is greater than that for water, i.e. they exhibit "hydrophobic" properties.

The members of the class of shape-selective zeolites useful herein have an effective pore size of generally less than about 7 Angstroms, such as to freely sorb normal hexane. In addition, the structure must provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded and the zeolite is not of the desired type. Windows of 10-membered rings are preferred, although, in some instances, excessive puckering of the rings or pore blockage may render these zeolites ineffective.

Although 12-membered rings in theory would not offer sufficient constraint to produce advantageous conversions, it is noted that the puckered 12-ring structure of TMA offretite does show some constrained access. Other 12-ring structures may exist which may be operative for other reasons, and therefore, it is not the present intention to entirely judge the usefulness of the particular zeolite solely from theoretical structural considerations.

A convenient measure of the extent to which a zeolite provides control to molecules of varying sizes to its internal structure is the Constraint Index of the zeolite. Zeolites which provide a highly restricted access to and egress from its internal structure have a high value for the Constraint Index, and zeolites of this kind usually have pores of small size. On the other hand, zeolites which provide relatively free access to the internal zeolite structure have a low value for the Constraint Index. The method by which Constraint Index is determined is described fully in U.S. Patent 4,016,218.

Constraint Index (CI) values for some typical materials are:

|  | CI (at test temperature) |
| --- | --- |
| ZSM-4 | 0.5 (316°C) |
| ZSM-5 | 6-8.3 (371°C - 316°C) |
| ZSM-11 | 5-8.7 (371°C - 316°C) |
| ZSM-12 | 2.3 (316°C) |
| ZSM-20 | 0.5 (371°C) |
| ZSM-22 | 7.3 (427°C) |
| ZSM-23 | 9.1 (427°C) |
| ZSM-34 | 50 (371°C) |
| ZSM-35 | 4.5 (454°C) |
| ZSM-38 | 2 (510°C) |
| ZSM-48 | 3.5 (538°C) |
| ZSM-50 | 2.1 (427°C) |
| TMA Offretite | 3.7 (316°C) |
| TEA Mordenite | 0.4 (316°C) |
| Clinoptilolite | 3.4 (510°C) |
| Mordenite | 0.5 (316°C) |
| REY | 0.4 (316°C) |
| Amorphous Silica-alumina | 0.6 (538°C) |
| Dealuminized Y | 0.5 (510°C) |
| Erionite | 38 (316°C) |
| Zeolite Beta | 0.6-2.0 (316°C - 399°C) |

The above-described Constraint Index is an important and even critical definition of those porous crystalline silicates which are useful in the instant invention. The very nature of this parameter and the recited technique by which it is determined, however, admit of the possibility that a given porous crystalline silicate can be tested under somewhat different conditions and thereby exhibit different Constraint Indices. Constraint Index seems to vary somewhat with severity of operations (conversion) and the presence or absence of binders. Likewise, other variables, such as crystal size of the porous crystalline silicate, the presence of occluded contaminants, etc., may affect the Constraint Index. Therefore, it will be appreciated that it may be possible to so select test conditions, e.g. temperature, as to establish more than one value for the Constraint Index of a particular porous crystalline silicate. This explains the range of Constraint Indices for some zeolites, such as ZSM-5, ZSM-11 and Beta.

It is to be realized that the above CI values typically characterize the specified porous crystalline silicates, but that such are the cumulative result of several variables useful in the determination and calculation thereof. Thus, for a given material exhibiting a CI value within the range of 1 to 12, depending on

6

the temperature employed during the test method within the aforenoted range of 290°C (550°F) to 570°C (950°F), with accompanying conversion between 10% and 60%, the CI may vary within the indicated range of 1 to 12. Likewise, other variables such as the crystal size of the material, the presence of possibly occluded contaminants and binders intimately combined with the zeolite may affect the CI. It will accordingly be understood to those skilled in the art that the CI, as utilized herein, while affording a highly useful means for characterizing the materials of interest is approximate, taking into consideration the manner of its determination, with the possibility, in some instances, of compounding variable extremes. However, in all instances, at a temperature within the above-specified range of 290°C to 570°C (550°F to 950°F), the CI will have a value for any given material of interest herein within the approximate range of 1 to 12.

Zeolite beta is taught by U.S. Patent 3,308,069.

Zeolite ZSM-5 is taught by U.S. Patent 3,702,886, and Re. 29,949.

Zeolite ZSM-11 is taught by U.S. Patent 3,709,979.

Zeolite ZSM-12 is taught by U.S. Patent 3,832,449, issued August 27, 1974.

Zeolite ZSM-22 is taught by U.S. Patent 4,556,477, issued to Dwyer.

Zeolite ZSM-23 is taught by U.S. Patent 4,076,342.

Zeolite ZSM-35 is described by U.S. Patent 4,016,245.

Zeolite ZSM-38 is described by U.S. Patent 4,046,859.

Zeolite ZSM-48 is described by U.S. Patent 4,397,827.

Zeolite ZSM-50 is described by U.S. Patent 4,640,849.

ZSM-50 is believed to be of similar structure to ICI's EU-1 disclosed in European Patent Application EPB 4226 and Teijin's TPZ-3, disclosed in European Patent Application EPA 51318.

The preferred porous crystalline silicates in this invention include those having the structure of zeolite beta, ZSM-5, ZSM-11, ZSM-12, ZSM-22, ZSM-23, ZSM-35, ZSM-38, ZSM-48, and ZSM-50, with ZSM-5 being particularly preferred.

The original cations of the above molecular sieves are preferably replaced in accordance with techniques well known in the art, at least in part, with hydrogen or hydrogen precursor cations and/or non-noble metal ions of Group VIII of the Periodic Table, e.g. nickel, iron and/or cobalt.

The shape-selective porous crystalline silicate used in this invention may be in the hydrogen form or it may be ion-exchanged or impregnated in accordance with well-known procedures in order to reduce alkali metal content of these materials.

In a preferred aspect of this invention, the shape-selective porous crystalline silicates are selected as those having a crystal framework density, in the dry hydrogen form, of not substantially below about 1.6 grams per cubic centimeter. It has been found that porous crystalline silicates which satisfy all three of the following criteria are most desired. The preferred shape-selective porous crystalline silicates of this invention are those having a Constraint Index as defined above of about 1 to 12, a silica-to-alumina mole ratio of at least about 12, and a dried crystal density of not substantially less than about 1.6 grams per cubic centimeter. The dry density for known structures may be calculated from the number of silicon plus aluminum atoms per 1000 cubic Angstroms, as given, e.g. on page 19 of the article on "Zeolite Structure" by W.M. Meier. This paper is included in Proceedings of the Conference on Molecular Sieves, published by the Society of Chemical Industry, London, April, 1967. When the crystal structure is unknown, the crystal framework density may be determined by classical pycnometer techniques.

Catalysts containing shape-selective porous crystalline silicates may be prepared in various ways. The catalyst may be separately prepared in the form of particles, such as pellets or extrudates, for example, and simply mixed in the required proportions. The particle size of the individual component particles may be quite small, for example, from about 20 to about 200 microns, when intended for use in fluid bed operation, or they may be as large as up to about 1.3 cm (1/2") for moving bed operation. Alternatively, the components may be mixed as powders and formed into pellets or extrudate, each pellet containing both components in substantially the required proportions.

The steaming process is achieved by partial pressure steaming of shape-selective porous crystalline silicate for a period of time so that, when admixed with conventional cracking catalyst, the resulting catalyst converts a contacting hydrocarbon stream to a gasoline product having a high RON + O without a substantial loss in gasoline plus distillate yield. Generally, the porous crystalline silicate is contacted with steam at a partial pressure of 103 to 413 kPa (0 to 45 psig), at a temperature of from 205° to 870°C (400° to 1600°F), preferably 430° to 790°C (800° to 1450°F) for a period of time not less than 5 hours, preferably not less than 10 hours, and most preferably between 10 and 60 hours.

It should be noted that the conditions for steaming the porous crystalline silicate may be interdependent upon one another. For example, if the steaming process is at the lower end of the temperature scale, the steaming time should be increased as a compensation measure.

The following examples will serve to illustrate the process of the invention without limiting the same.

The conventional cracking catalyst used in the examples to which the ZSM-5 zeolite catalyst was added was a commercially available rare earth-exchanged Y-Type zeolite FCC cracking catalyst produced via in-situ crystallization by Engelhard Corp., and was equilibrated through use in a commercial FCC unit.

In general, in order to improve the stability of a cracking catalyst, the large pore crystalline silicate catalyst is exchanged with a rare earth element, e.g. lanthanum, cerium, etc. Any rare earth oxide may be utilized in the catalyst; hence, the designation $RE_2O_3$ for rare earth oxide.

Example 1

ZSM-5 crystals were prepared by the following procedure:

10.3 parts of aluminum sulfate, 14.1 parts of sodium hydroxide and 0.43 parts of Daxad 27, a surfactant available from W. R. Grace, Organic Chemicals Division, were dissolved in 234 parts of $H_2O$. The resultant solution had a specific gravity of 1.080 ± .001. The aluminate solution was charged to an autoclave. One part ZSM-5 seeds as dispersed slurry, 103 parts amorphous precipitated silica (HiSil 233), 12.5 parts n-propylamine and 4.7 parts NaCl were added sequentially. The agitator of the autoclave was set so as to facilitate good mixing during the entire charging process. The autoclave was then sealed, heated to 320°F and held at 160 ± 6°C (320 ± 10°F) for 18 hours while maintaining vigorous agitation. The mixture was then cooled to 110°C (230°F), volatile organics were removed by flashing and the remaining slurry was cooled to room temperature. The autoclave was then discharged and the zeolite slurry product was diluted with a mixture of 130 ppm of flocculant (American Cynamid Magnafloc 1563C) and 4-5 parts water per part slurry. The slurry was allowed to settle and supernatant liquid was drawn off. The settled solids were reslurried to the original volume of the preceding step with water and 26 ppm of flocculant per part slurry were added. After settling, the aqueous phase was decanted and the reslurry, settling, decantation procedure repeated two more times for a total of 4 decant-washes. Following the final decant wash the zeolite slurry was filtered to 33.4% solids. A small sample of this filter cake was dried for analysis and identified as ZSM-5 (X-ray diffraction). Chemical analyses indicated that the $SiO_2/Al_2O_3$ molar ratio was 53.

Example 2

The procedure of Example 1 was carried out through the ZSM-5 crystallization and flashing steps. Following autoclave discharge the ZSM-5 was retained in the crystallizer mother liquor for direct incorporation into a fluid catalyst. No further processing of the slurry was performed. A small portion of this slurry was filtered and dried for analysis. The dried zeolite was identified as ZSM-5 by X-ray diffraction. Chemical analyses indicated that the $SiO_2/Al_2O_3$ molar ratio was 58. The filtrate contained 6.4 wt.% $SiO_2$, 3.1% Na and less than 25 ppm $Al_2O_3$.

Example 3

Solution A, containing 7.91 parts sodium silicate (28.7 wt.% $SiO_2$, 8.9 wt.% $Na_2O$, 62.4 wt.% $H_2O$) and 37.7 parts water, was cooled to 4.4 to 7.2°C (40-45°F) and mixed at 700-800 rpm with a Cowles mixer while slowly adding 0.56 parts of 100% $H_2SO_4$. Over the next 1/2 hour solution B, containing 1 part aluminum sulfate (17.2 wt.% $Al_2O_3$) and 4.0 parts water, was slowly added and the resulting gel was agitated at 700-800 rpm for 1/2 hour. A slurry containing 2.45 parts ZSM-5 filter cake from Example 1 (0.82 parts ZSM-5 on 100% solids basis), 0.05 parts of a 10% Marasperse N dispersant solution available from Reed Lignin Inc., Rothschild, WI and 0.31 parts water were added to the gel and the resulting slurry was then mixed for 1 hour at 700-800 rpm. This material was then filtered on a Buchner funnel, reslurried to about 11% solids, homogenized and spray dried. The spray dried catalyst was then $NH_4NO_3$ exchanged, water washed and dried at 121°C (250°F) for at least 16 hours. The resulting catalyst contained 25% ZSM-5 in an amorphous $SiO_2$-$Al_2O_3$ matrix (dry basis).

Examples 4 and 5

A slurry was prepared by combining 4.35 parts of lower-cost ZSM-5 crystallizer slurry from Example 2 (0.82 parts ZSM-5 on 100% solids basis) with 7.2 parts sodium silicate (28.7 wt.% $SiO_2$, 8.9 wt.% $Na_2O$, 62.4 wt.% $H_2O$) and 37.7 parts water. This slurry was cooled to 4.4 to 7.2°C (40-45°F) and mixed at 700-800 rpm with a Cowles mixer while slowly adding 0.51 parts of 100% $H_2SO_4$. A solution containing 1 part

8

aluminum sulfate (17.2 wt.% $Al_2O_3$) and 4.00 parts water was next added to the slurry over a 1/2 hour period and the resulting get was agitated at 700-800 rpm for 1/2 hour. The gel pH was then adjusted to 4.0 by adding 0.24 parts of 100% $H_2SO_4$ over a 1/2 hour period and the gel was mixed for 1 hour at 700-800 rpm, filtered on a Buchner funnel and reslurried to about 10% solids. At this point the reslurried material was separated into two equal portions. The first half was homogenized and spray dried, while the second portion was spray dried directly without homogenization. Both spray dried products were $NH_4NO_3$ exchanged, water washed and dried at 121°C (250°F) for at least 16 hours. The catalyst prepared with homogenization is designated Example 4 and the catalyst without homogenization is Example 5. Both catalysts contained 25% ZSM-5 in an amorphous $SiO_2$-$Al_2O_3$ matrix (dry basis).

Example 6

The ZSM-5 additive catalyst from Example 3 was treated for 10 hours at 788°C (1450°F) with a 45% steam/55% air mixture at 103 kPa (0 psig) in a fluidized-bed steaming apparatus.

Example 7

The ZSM-5 additive catalyst from Example 4 was treated for 10 hours at 788°C (1450°F) with a 45% steam/55% air mixture at 103 kPa (0 psig) in a fluidized-bed steaming apparatus.

Example 8

The ZSM-5 additive catalyst from Example 5 was treated for 10 hours at 788°C (1450°F) with a 45% steam/55% air mixture at 103 kPa (0 psig) in a fluidized-bed steaming apparatus.

Examples 9-11

Three blends, each containing 0.25% unsteamed ZSM-5 in commercial equilibrium REY cracking catalyst were prepared by combining 1 part unsteamed ZSM-5 additive from Examples 3, 4 and 5, respectively, with 99 parts of said REY catalyst.

Examples 12-14

Three blends, each containing 2% steamed ZSM-5 in a commercial equilibrium REY cracking catalyst were prepared by combining 8 parts steamed ZSM-5 additive catalyst from Examples 6, 7 and 8, respectively, with 92 parts of REY cracking catalyst.

Evaluations were conducted in a bench scale, fixed-fluidized bed unit at 516°C (960°F), cracking Joliet Sour Heavy Gas Oil (JSHGO); catalyst residence time was 1.0 minute while vapor residence time was 1.5-2 seconds. Runs were made at several catalyst to oil (C/O) ratios for each catalyst blend to cover a range of conversions. The resulting yields at a constant 60 vol.% conversion for the unsteamed ZSM-5 FCC additives are compared in Table 2. While comparable octane gains were obtained for the unsteamed current and improved lower-cost ZSM-5 additives, the improved lower-cost additives appear more active as indicated by the increased ($C_3^= + C_4^= + i\text{-}C_4$) yields, a measure of ZSM-5 activity. With available alkylation capacity and outside $i\text{-}C_4$ this increased activity results in a greater potential liquid yield (G + D + A).

The yields for the steamed ZSM-5 additives (2% ZSM-5 in REY Cracking Catalyst, Examples 12-14) are given in Table 3 at a constant 60 vol.% conversion. As indicated by the octane improvement and increased ($C_3^= + C_4^= + i\text{-}C_4$) yields, the lower-cost ZSM-5 additives exhibit greater hydrothermal stability. This improved stability should translate directly into lower additive catalyst makeup rates and thereby improve the cost effectiveness of ZSM-5 in cracking.

## Table 2

### Comparison of Unsteamed Conventional Preparation and Improved ZSM-5 Additives in Equilibrium REY Cracking Catalyst

Fixed-Fluidized Bed, 516°C (960°F), 1.0 Min. On-Stream, JSHGO

| | REY Catalyst | +0.25% Unsteamed ZSM-5 | | |
| | | Conventional Preparation | Improved Lower-Cost | |
| | | | W/Homog. | W/O Homog. |
|---|---|---|---|---|
| **Catalyst Description** | | | | |
| ZSM-5 | - | Example 1 | Example 2 | Example 2 |
| Additive Catalyst | - | Example 3 | Example 4 | Example 5 |
| Catalyst Blend | - | Example 9 | Example 10 | Example 11 |
| **Yields at 60 Vol.% Conversion** | | | | |
| $C_5^+$ Gasoline (G), % Vol. | 49.6 | 39.5 | 36.4 | 37.9 |
| Total $C_4$'s, % Vol. | 11.3 | 17.4 | 16.9 | 17.3 |
| Dry Gas, % Wt. | 6.2 | 11.6 | 12.7 | 11.7 |
| Coke, % Wt. | 3.8 | 4.0 | 3.7 | 3.8 |
| $C_3^=+C_4^=+i\text{-}C_4$, % Vol. | 15.8 | 29.9 | 31.7 | 31.8 |
| G+D, % Vol. | 83.0 | 71.9 | 69.8 | 71.1 |
| $C_5^+$ Gasoline + Potential Alkylate (PA), % Vol. | 69.6 | 79.5 | 79.9 | 82.9 |
| G+D+PA, % Vol. | 103.0 | 112.0 | 113.5 | 115.6 |
| Outside $i\text{-}C_4$, % Vol. | 9.7 | 21.6 | 24.7 | 25.4 |
| RON + O, $C_5^+$ Gasoline | 88.8 | 92.0 | 91.6 | 91.8 |
| RON + O, G + PA | 90.3 | 92.8 | 92.7 | 92.8 |
| $\Delta$ RON + O, $C_5^+$ Gasoline | - | +3.2 | +2.8 | +3.0 |
| $\Delta$ $(C_3^=+C_4^=+i\text{-}C_4)$, % Vol. | - | +14.1 | +15.9 | +16.0 |

W: With
W/O: Without
Homog: Homogenization
JSHGO: Joliet Sour Heavy Gas Oil

Table 3

Comparison of Steamed Conventional Preparation and Improved ZSM-5
Additives in Equilibrium REY Cracking Catalyst

Fixed-Fluidized Bed, 516°C (960°F), 1.0 Min. On-Stream, JSHGO
All Additives Steamed: 10 hours, 788°C (1450°F), 45% Steam/55% Air, 103 kPa (0 psig)

| | REY Catalyst | +2.0% Steamed ZSM-5 | | |
| | | Conventional Preparation | Improved W/Homog. | Lower-Cost W/O Homog. |
|---|---|---|---|---|
| **Catalyst Description** | | | | |
| ZSM-5 | - | Example 1 | Example 2 | Example 2 |
| Additive Catalyst | - | Example 6 | Example 7 | Example 8 |
| Catalyst Blend | - | Example 12 | Example 13 | Example 14 |
| **Yields at 60 Vol.% Conversion** | | | | |
| $C_5^+$ Gasoline (G), % Vol. | 49.6 | 46.6 | 43.7 | 43.4 |
| Total $C_4$'s, % Vol. | 11.3 | 13.0 | 15.1 | 15.4 |
| Dry Gas, % Wt. | 6.2 | 7.3 | 8.6 | 8.4 |
| Coke, % Wt. | 3.8 | 4.1 | 4.2 | 4.1 |
| $C_3^=+C_4^=+i-C_4$, % Vol. | 15.8 | 19.5 | 23.6 | 23.5 |
| G+D, % Vol. | 83.0 | 80.9 | 76.6 | 76.8 |
| $C_5^+$ Gasoline + Potential Alkylate (PA), % Vol. | 69.6 | 71.5 | 74.3 | 73.6 |
| G+D+PA, % Vol. | 103.0 | 106.0 | 107.3 | 107.2 |
| Outside $i-C_4$, % Vol. | 9.7 | 12.7 | 15.8 | 15.3 |
| RON + O, $C_5^+$ Gasoline | 88.8 | 90.1 | 90.8 | 90.5 |
| RON + O, G + PA | 90.3 | 91.5 | 92.1 | 92.0 |
| $\Delta$ RON + O, $C_5^+$ Gasoline | - | +1.3 | +2.0 | +1.7 |
| $\Delta$ ($C_3^=+C_4^=+i-C_4$), % Vol. | - | +3.7 | +7.8 | +7.7 |

W:       With
W/O:     Without
Homog:   Homogenization
JSHGO:   Joliet Sour Heavy Gas Oil

## Claims

1.  A method of preparing a catalyst comprising a composite of a crystalline zeolite and a silica-containing inorganic oxide matrix, for use in catalytic cracking, in which the composite is formed from the components of a siliceous solution containing the already-synthesised crystalline zeolite, and is subjected to drying, characterised in that said crystalline zeolite has a $SiO_2/Al_2O_3$ mole ratio greater than 12 and a constraint index between 1 and 12, and said siliceous solution results from bringing together a silica-containing reaction mixture in which said zeolite has crystallised and a silica-containing inorganic oxide matrix precursor solution which is independently capable of forming a matrix for said zeolite, the matrix of the resulting composite containing silica derived not only from the precursor solution but also from the reaction mixture.

2. The method of claim 1 wherein said crystalline zeolite has the structure selected from the group consisting of zeolite beta, ZSM-5, ZSM-11, ZSM-5/ZSM-11, ZSM-12, ZSM-22, ZSM-23, ZSM-35, ZSM-48 and ZSM-50.

3. The method of claim 2 wherein said reaction mixture comprises a source of aluminum, a source of alkali metal, and organic directing agent and amorphous precipitated silica.

4. The method of claim 1 wherein said inorganic oxide matrix is selected from the group consisting of silica and silica-alumina.

5. The method of claim 3 wherein said crystalline zeolite has the structure of ZSM-5, said source of aluminum includes aluminum sulfate, said source of alkali metal includes sodium hydroxide, said organic directing agent is an n-alkylamine and the initial solids contents of said reaction mixture is at least 15 wt.%.

6. The method of claim 3 wherein said drying is accomplished by spray drying to form an inorganic oxide matrix bound crystalline zeolite having a particle diameter of about 20 to 200 microns and wherein said organic directing agent is removed prior to adding said matrix precursor.

7. The method of claim 1 wherein the resulting product comprises about 40 to 95 wt.% of silica-alumina matrix.

8. The method of claim 1 wherein a large pore zeolite is added to said mixture prior to said drying.

9. A method for catalytically cracking a hydrocarbon feedstock in a cracking unit to a product comprising gasoline of an increased octane number in the presence of a cracking catalyst inventory comprising a silica-containing inorganic oxide matrix bound porous crystalline zeolite having a Constraint Index of between about 1 and about 12 which is prepared by the method of any one of claims 1 to 8 and a catalytically active cracking catalyst selected from the group consisting of amorphous silica-alumina, crystalline silica-alumina and a large pore crystalline zeolite.

**Patentansprüche**

1. Verfahren zur Herstellung eines Katalysators zur Verwendung beim katalytischen Cracken, der ein Verbundmaterial eines kristallinen Zeolith und einer Siliciumdioxid enthaltenden anorganischen Oxidmatrix umfaßt, wobei das Verbundmaterial aus den Komponenten einer siliciumhaltigen Lösung gebildet wird, die den bereits synthetisierten kristallinen Zeolith enthält, und dem Trocknen unterzogen wird, dadurch **gekennzeichnet,** daß der kristalline Zeolith ein $SiO_2/Al_2O_3$-Molverhältnis von mehr als 12 und einen Zwangsindex zwischen 1 und 12 aufweist, und daß die siliciumhaltige Lösung aus der Verbindung einer Siliciumdioxid enthaltenden Reaktionsmischung, in der der Zeolith kristallisiert ist, und einer Siliciumdioxid enthaltenden Vorstufe der anorganischen Oxidmatrix resultiert, die die Matrix für den Zeolith unabhängig bilden kann, wobei die Matrix des resultierenden Verbundmaterials Siliciumdioxid enthält, das nicht nur aus der Vorstufen-Lösung sondern auch aus der Reaktionsmischung abgeleitet ist.

2. Verfahren nach Anspruch 1, worin der kristalline Zeolith die Struktur aufweist, die aus der Gruppe ausgewählt ist, die aus Zeolith Beta, ZSM-5, ZSM-11, ZSM-5/ZSM-11, ZSM-12, ZSM-22, ZSM-23, ZSM-35, ZSM-48 und ZSM-50 besteht.

3. Verfahren nach Anspruch 2, worin die Reaktionsmischung eine Quelle von Aluminium, eine Quelle von Alkalimetall und ein organisches Leitmittel und amorphes gefälltes Siliciumdioxid enthält.

12

EP 0 350 549 B1

**4.** Verfahren nach Anspruch 1, worin die anorganische Oxidmatrix aus der Gruppe ausgewählt ist, die aus Siliciumdioxid und Siliciumdioxid-Aluminiumoxid besteht.

**5.** Verfahren nach Anspruch 3, worin der kristalline Zeolith die Struktur von ZSM-5 hat, die Quelle von Aluminium Aluminiumsulfat umfaßt, die Quelle von Alkalimetall Natriumhydroxid umfaßt, das organische Leitmittel n-Alkylamin ist und der Anfangsfeststoffgehalt der Reaktionsmischung mindestens 15 Gew.-% beträgt.

**6.** Verfahren nach Anspruch 3, worin das Trocknen durch Sprühtrocknen durchgeführt wird, um einen mit einer anorganischen Oxidmatrix gebundenen kristallinen Zeolith mit einem Partikeldurchmesser von etwa 20 bis 200 $\mu$m zu bilden, und worin das organische Leitmittel vor der Zugabe der Matrix-Vorstufe entfernt wird.

**7.** Verfahren nach Anspruch 1, worin das resultierende Produkt etwa 40 bis 95 Gew.-% der Siliciumdioxid-Aluminiumoxid-Matrix umfaßt.

**8.** Verfahren nach Anspruch 1, worin der großporige Zeolith der Mischung vor dem Trocknen zugesetzt wird.

**9.** Verfahren zum katalytischen Cracken einer Kohlenwasserstoffbeschickung in einer Crackanlage zu einem Produkt, das Benzin mit einer erhöhten Octanzahl umfaßt, in Gegenwart eines Crackkatalysatorbestandes, der einen mit einer Siliciumdioxid enthaltenden anorganischen Oxidmatrix gebundenen porösen kristallinen Zeolith mit einem Zwangsindex von etwa 1 bis etwa 12, der nach dem Verfahren nach einem der Ansprüche 1 bis 8 hergestellt wurde, und einen katalytisch aktiven Crackkatalysator umfaßt, der aus der Gruppe ausgewählt ist, die aus amorphem Siliciumdioxid-Aluminiumoxid, kristallinem Siliciumdioxid-Aluminiumoxid und einem großporigen kristallinen Zeolith besteht.

**Revendications**

**1.** Un procédé de préparation d'un catalyseur comprenant un composite constitué d'une zéolite cristalline et d'une matrice d'oxydes inorganiques contenant de la silice, destiné à une utilisation dans un craquage catalytique, dans lequel le composite est formé à partir des composants d'une solution siliceuse contenant une zéolite cristalline déjà synthétisée puis il est soumis à un séchage, caractérisé en ce que ladite zéolite cristalline présente un rapport molaire $SiO_2$-$Al_2O_3$ supérieur à 12 et un indice de contrainte compris entre 1 et 12 et ladite solution siliceuse résulte d'une combinaison d'un mélange réactionnel contenant de la silice, dans lequel ladite zéolite a cristallisée et d'une solution précurseur d'une matrice d'oxydes inorganiques contenant de la silice qui est indépendamment capable de former une matrice pour ladite zéolite, la matrice du composite résultant contient de la silice provenant non seulement de la solution de précurseur mais également du mélange réactionnel.

**2.** Un procédé selon la revendication 1, caractérisé en ce que ladite zéolite cristalline présente une structure sélectionnée dans le groupe composé de: zéolite $\beta$, ZSM-5, ZSM-11, ZSM-5/ZSM-11, ZSM-12, ZSM-22, ZSM-23, ZSM-35, ZSM-48 et ZSM-50.

**3.** Un procédé selon la revendication 2, caractérisé en ce que ledit mélange réactionnel comprend une source d'aluminium, une source de métal alcalin, un agent organique de direction et du silice précipité amorphe.

**4.** Un procédé selon la revendication 1, caractérisé en ce que ladite matrice d'oxydes inorganiques est sélectionnée dans le groupe consistant en silice et silice-oxyde d'aluminium.

**5.** Un procédé selon la revendication 3, caractérisé en ce que ladite zéolite cristalline a la structure de la ZSM-5, ladite source d'aluminium correspond au sulfate d'aluminium, ladite source de métal alcalin correspond à l'hydroxyde de sodium, ledit agent organique de direction correspond à la n-alkylamine et la teneur initiale en solides dudit mélange réactionnel est d'au moins 15% en poids.

**6.** Un procédé selon la revendication 3, caractérisé en ce que ledit séchage est réalisé par séchage par pulvérisation pour former une zéolite cristalline liée à une matrice d'oxydes inorganiques dont le

13

diamètre des particules est compris entre 20 et 200 μm et dans lequel ledit agent organique de direction est éliminé avant l'addition dudit précurseur de matrice.

7.  Un procédé selon la revendication 1, caractérisé en ce que le produit résultant comprend entre 40 et 95% en poids de matrice silice-oxyde d'aluminium.

8.  Un procédé selon la revendication 1, caractérisé en ce qu'une zéolite à larges pores est ajoutée audit mélange avant ledit séchage.

9.  Un procédé de craquage catalytique d'une charge d'hydrocarbures dans une unité de craquage, en un produit comprenant de l'essence ayant un indice d'octane plus élevé, en présence d'une composition du catalyseur de craquage comprenant une zéolite cristalline poreuse liée à une matrice d'oxydes inorganiques contenant de la silice et présentant un indice de contrainte compris entre environ 1 et environ 12, qui est préparé par le procédé selon l'une quelconque des revendications 1 à 8, et un catalyseur de craquage actif du point de vue catalytique sélectionné dans le groupe consistant en oxyde d'aluminium-dioxyde de silicium amorphe, oxyde d'aluminium-dioxyde de silicium cristallin et zéolite cristalline à larges pores.